# EUROPÄISCHE PATENTSCHRIFT

(11) **EP 1 319 328 B1**
(45) Veröffentlichungstag und Bekanntmachung des Hinweises auf die Patenterteilung: **11.10.2006**
(21) Anmeldenummer: 02026554.2
(22) Anmeldetag: 28.11.2002
(51) Int. Cl.: A01B 33/14

(54) **Bodenbearbeitungsgerät mit formschlüssig festgelegten Zinken**
Cultivator with form-fitting tines
Cultivateur avec des dents conformées

(30) Priorität: 14.12.2001 DE 10161595
(43) Veröffentlichungstag der Anmeldung: 18.06.2003
(73) Patentinhaber: Lemken GmbH & Co. KG, 46519 Alpen (DE)
(72) Erfinder: Meurs, Wilhelm, 46519 Alpen (DE); Siebers, Josef, 46509 Xanten (DE); Terboven, Johannes, 46519 Alpen (DE); Gebbeken, Martin, 46519 Alpen (DE); Hönnekes, Ernst, 47652 Weeze (DE)
(74) Vertreter: Schulte, Jörg

(56) Entgegenhaltungen:
- EP-A- 1 082 889
- EP-A- 1 208 729
- DE-U- 8 325 853
- FR-A- 2 405 630
- GB-A- 2 128 461
- US-A- 4 044 840
- PATENT ABSTRACTS OF JAPAN vol. 014, no. 096 (C-0692), 22. Februar 1990 (1990-02-22) & JP 01 304803 A (KUBOTA LTD), 8. Dezember 1989 (1989-12-08)

## Beschreibung

Die Erfindung betrifft ein Bodenbearbeitungsgerät, insbesondere Kreiselegge mit einem quer zur Arbeitsrichtung angeordneten Getriebekasten mit mehreren in einer Reihe nebeneinander angeordneten und um aufrechte Achsen rotierend angetriebenen Rotoren mit taschenförmigen Aufnahmen für Zinken, die ein Befestigungsteil und ein Arbeitsteil aufweisen und mit ihrem Befestigungsteil mit den Rotoren lösbar verbunden sind, wobei die in die taschenförmigen Aufnahmen einsteckbaren Zinken unmittelbar formschlüssig mit den Rotoren verbindbar ausgebildet und über Haltemittel in der Formschlussverbindung arretierbar sind.

Ein derartiges Bodenbearbeitungsgerät ist der europäischen Patentanmeldung EP 1 082 889 zu entnehmen. Bei dem Gegenstand dieser EP 1 082 889 weist der jeweilige Rotor eine taschenförmige Aufnahme auf, in die die Zinken der Rotoren radial eingesteckt werden können und mit Hilfe eines zentralen Bolzens gehalten werden. Für die Montage und Demontage der Zinken, die schnell auswechselbar sein sollen, wird der Bolzen axial verschoben. Da die Zinken im Erdreich arbeiten, gelangen auch Erdpartikel in den Schiebebereich der Bolzen, sodass nach längerer Einsatzzeit das radiale Verschieben der Bolzen erschwert ist oder gar unmöglich wird. Zusätzlich wird der Bolzen auch über die Zinken mit den üblichen Fliehkräften und Stoßkräften beaufschlagt, was zum Verschleiß und auch zu Beschädigungen des Bolzens führt, obwohl die Torsionskräfte, die auf den Zinken wirken, durch die taschenförmige Aufnahme abgeleitet werden. Aus der FR-A-2 405 630, der DE-GM 83 25 853, der US 4 044 840, der GB 2 128 461 A und der EP 1 208 729 A1 sind Lösungen bekannt, bei denen der Formschluss durch Verschraubung, durch Verstiften oder Nut-/Federverbindung erhalten bleibt. Sie sind entweder aufwendig in der Montage oder können durch das Erdreich zugesetzt werden.

Der Erfindung liegt die Aufgabe zugrunde, ein Bodenbearbeitungsgerät, insbesondere eine Kreiselegge zu schaffen, bei der die sogenannten Schnellwechselzinken tatsächlich und bleibend schnell und einfach gewechselt werden können und bei denen die Haltemittel wie Bolzen praktisch mit keinen mechanischen Belastungen beaufschlagt sind.

Die Aufgabe wird gemäß der Erfindung dadurch gelöst, dass die Haltemittel als radial zur Achse der Rotoren verschiebbare Keile ausgeführt sind und über Sicherungsmittel verfügen, die eine Fixierung in der Halteposition erbringend ausgebildet sind.

Hierdurch wird gewährleistet, dass die in die jeweils taschenförmige Aufnahme gesteckten Zinken nicht über irgendwelche Befestigungsmittel in der Aufnahme festgelegt werden, sondern unmittelbar und formschlüssig mit dem Rotor verbunden werden. Die Zinken werden lediglich durch Haltemittel in Form der radial verschiebbaren, sich nicht zusetzenden Keile in Formschlussverbindung arretiert. Die Haltemittel werden dabei praktisch nur mit geringen Kräften beaufschlagt, da sie lediglich die Zinken in Formschlussverbindung halten, nicht aber an den Belastungen der Zinken in irgendeiner Form teilnehmen. Stoß-, Flieh- und Torsionskräfte werden von der taschenförmigen Aufnahme der Rotoren und der Formschlussverbindung zwischen Rotor und Zinken übernommen, nicht aber vom Haltemittel. Die radial zur Achse verschiebbaren Keile sind leicht zu montieren und auch zu demontieren. Ein unbeabsichtigtes Lösen der Haltemittel und damit auch der Zinkenformschlussverbindung ist sicher zu vermeiden, weil die Haltemittel über Sicherungsmittel verfügen, die eine Fixierung in der Halteposition erbringend ausgebildet sind. Auch diese Sicherungsmittel unterliegen wie die Haltemittel selbst keinen Belastungen, die durch die Arbeit der Zinken entstehen, sodass sie auch in ihrer Arretierposition nicht gefährdet sind.

Dadurch, dass die Haltemittel nur mit geringen Kräften belastet werden und die Zinken lediglich in Formschlussverbindung zu halten sind, können die Haltemittel entsprechend einfach, klein und daher auch leicht bedienbar ausgebildet werden. Außerdem können sie leicht vor Schmutz gesichert werden.

Die Erfindung sieht weiter vor, dass die Sicherungsmittel einfach und zweckmäßig ausgebildet sind, wozu vorgesehen ist, dass die Sicherungsmittel über Federkraft, Steckstifte, Halteösen oder Reibkraft in ihre Fixierstellung verbleibend ausgebildet sind. Teuere und aufwendige Bauteile erübrigen sich dadurch.

Gemäß einer zweckmäßigen Weiterbildung ist vorgesehen, dass das Befestigungsteil der Zinken mindestens eine Ausnehmung und die Rotoren auf ihrer Deckplattenunterseite korrespondierende Erhebungen aufweisen, die mit den Ausnehmungen der Zinken die Formschlussverbindung bildend ausgeführt sind. Bei dieser Ausführung greifen die Erhebungen der Rotoren in die Ausnehmungen der Zinken ein, die jeweils korrespondierend ausgebildet sind, sodass eine Formschlussverbindung gesichert ist. Die Anordnung bzw. Ausbildung der Ausnehmung in den Zinken hat den Vorteil, dass diese entsprechend schmal und kostengünstig hergestellt werden können, insbesondere, wenn sie als Schmiedeteil ausgebildet sind.

Umgekehrt kann gemäß der Erfindung aber auch vorgesehen sein, dass die Zinken am Befestigungsteil eine Erhebung für die formschlüssige Verbindung mit einer korrespondierenden Ausnehmung des Rotors aufweisen. Da in aller Regel die Erhebung mehr dem Verschleiß unterliegt, ist sie bei dieser Ausführung dem Teil zugeordnet, das aufgrund des am Arbeitsteil der Zinken auftretenden Verschleißes regelmäßig ausgewechselt werden muss.

Sowohl von der Herstellung als auch von dem Einsatz her ist es von Vorteil, wenn die Ausnehmung im Befestigungsteil als Sackloch ausgebildet ist und die Erhebung als korrespondierender Nocken. Mit dem Einschieben des Befestigungsteils in die taschenförmige Aufnahme rastet somit die Erhebung sicher in das zugeordnete Sackloch bzw. in die Ausnehmung ein und die Formschlussverbindung ist gegeben.

Um das Einschieben des Befestigungsteils bzw. des Zinkens in die taschenförmigen Aufnahmen zu erleichtern und sie gewissermaßen beim Einschiebvorgang zu führen, ist vorgesehen, dass das Befestigungsteil sich zum Ende hin verjüngend, vorzugsweise keilförmig ausgebildet ist. Dabei kann sowieso mit Spiel gearbeitet werden, weil das eigentliche Fixieren in der Formschlussverbindung dadurch erreicht wird, dass das Haltemittel eingeschoben bzw. eingeführt wird. Auf diese Weise ist das Einführen in die taschenförmigen Aufnahmen sehr schnell zu erreichen, gleichzeitig auch das Herausnehmen bei der Demontage.

Um ein Losrappeln bzw. Losschlagen der Zinken zu vermeiden, sieht die Erfindung vor, dass das Befestigungsteil Stufen bildend geformt ist und eine Dicke aufweist, die in der arretierten Position ein Anliegen an der Deckplattenunterseite und Einführungskante der Tasche sichernd ausgeführt ist. Der jeweilige Zinken oder besser gesagt das Befestigungsteil wird also nicht nur im vorderen Teil durch das Haltemittel festgelegt, sondern gleichzeitig auch, dadurch, dass es im entsprechenden Eingangsbereich der Tasche zwischen der Deckplattenunterseite und der Einführungskante festgelegt ist.

Zur Erleichterung und Absicherung des Einschubvorganges ist ergänzend gemäß der Erfindung vorgesehen, dass die Erhebung auf der Deckplattenunterseite von der Einführungskante in Richtung Taschenmitte verdickt und eine ansteigende Fläche bildend ausgeführt ist, während die Fläche der Erhebung auf dem Befestigungsteil umgekehrt geneigt ist. Hierdurch ist vermieden, dass beim Einschieben der Befestigungsteile der Zinken diese gegen die Erhebungen stoßen oder mit ihren Erhebungen irgendwo anstoßen, sodass damit der Einschubvorgang erleichtert und gesichert wird.

Insgesamt ist so ein Bodenbearbeitungsgerät, insbesondere eine Kreiselegge geschaffen, bei der die Zinken nicht nur schnell ausgewechselt werden können, sondern auch einfach und kostengünstig ausgeführt sind. Die durch die Arbeit der Zinken auftretenden Belastungen werden von den Halte- und Sicherungsmitteln ferngehalten, sodass diese nicht nur einfach ausgeführt und ausgebildet sein können, sondern auch funktionssicher leichtgängig und einfach zu bedienen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Bodenbearbeitungsgerät in Form einer Kreiselegge in Seitenansicht,
- Figur 2: eine Explosionsdarstellung des Rotors mit Zinken,
- Figur 3: eine Explosionsdarstellung des Rotors mit Zinken aus einer Sicht schräg oberhalb des Rotors,
- Figur 4: eine Schnittdarstellung von Rotor und Zinken und
- Figur 5: eine Explosionsdarstellung gemäß Figur 3 mit anderer Anordnung von Ausnehmungen und Erhebungen.

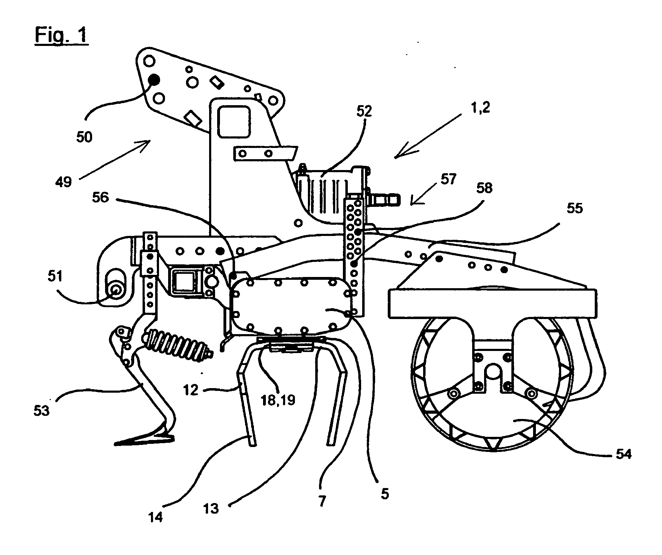

Figur 1 zeigt ein Bodenbearbeitungsgerät 1 in Form einer Kreiselegge 2 mit einem Dreipunktturm 49, der einen Verbindungspunkt 50 für die Verbindung mit einem nicht dargestellten Traktoroberlenker und der Verbindungspunkten 51 für die Verbindung mit nicht dargestellten Traktorunterlenkern aufweist. Unterhalb des Dreipunktturmes 49 ist der Getriebekasten 5 angeordnet. Auf diesem Getriebekasten 5 befindet sich das Getriebe 52, über das die Zahnräder innerhalb des Getriebekastens 5 und damit auch die Rotoren 7 angetrieben werden. Vor dem Getriebekasten 5 sind die Spurlockerer 53 angeordnet. Hinter dem Getriebekasten 5 befindet sich die Walze 54, die über die Träger 55 um die Achse 56 schwenkbar und tiefeneinstellbar mit dem Getriebekasten 5 verbunden ist. Eine Tiefeneinstellung der Kreiselegge 2 erfolgt mit Hilfe der Stiftverstellung 57 mit den Steckstiften 58.

Der Rotor 7, der unterhalb des Getriebekastens 5 drehbar angeordnet ist, weist Taschen 19 mit taschenförmigen Aufnahmen 18 auf, in denen die Zinken 12 mit ihrem Befestigungsteil 13 eingesteckt und arretiert sind. Der Zinken 12 weist das Befestigungsteil 13 und ein Arbeitsteil 14 auf. Der Einfachheit halber ist in der Figur 1 nur ein Rotor 7 mit Zinken 12 dargestellt. Die Zinken 12 eines Rotors 7 sind in der Regel mit den Zinken 12' des benachbarten Rotors 7' in Drehrichtung um einen Winkel von 45 ° bis 145 ° versetzt angeordnet.

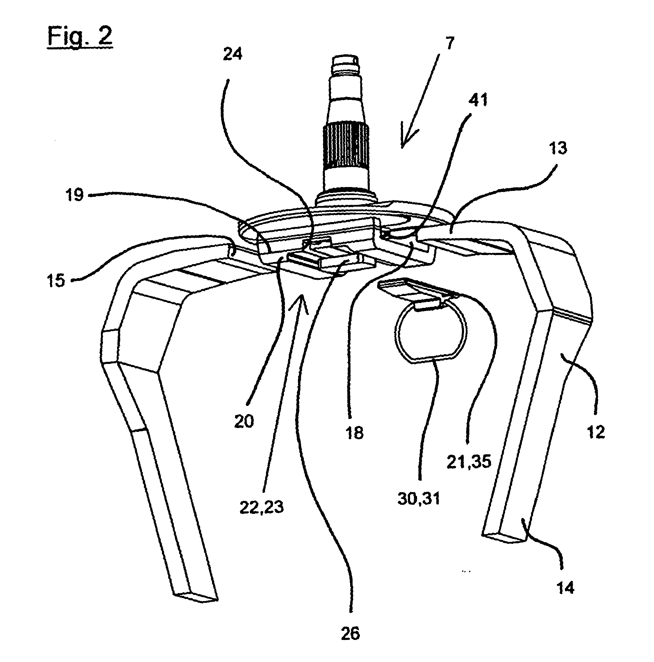

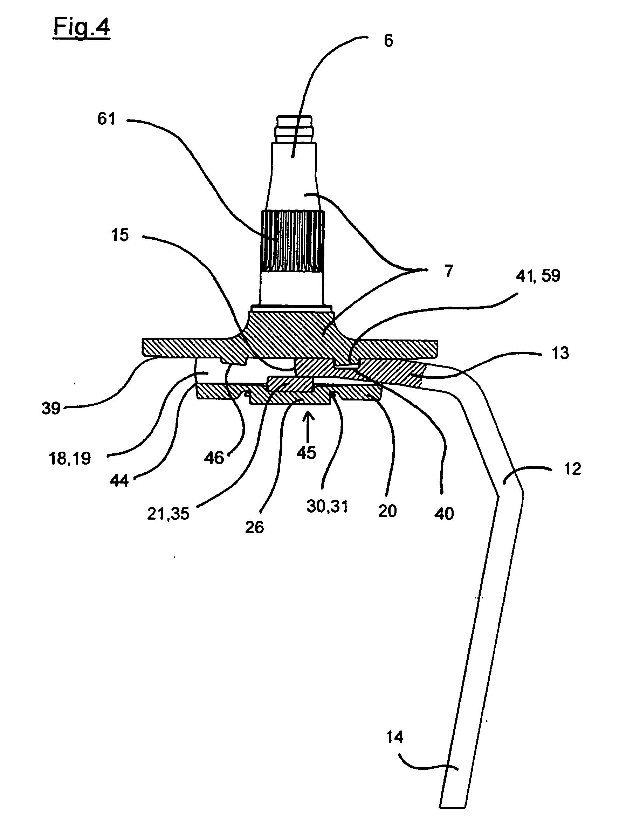

Figur 2 zeigt eine Explosionsdarstellung des Rotors 7 mit schnell auswechselbaren Zinken 12. Diese Zinken 12 weisen ein Befestigungsteil 13 und ein Arbeitsteil 14 auf. Das Arbeitsteil 14 ist hier aus zeichnungstechnischen Gründen im Querschnitt nur rechteckig dargestellt. Es kann auch einseitig angeschärft, beidseitig angeschärft oder auch nach außen gewölbt ausgebildet sein. Je nach Drehrichtung des Rotors 7 arbeitet der jeweilige Zinken 12 auf Schlepp oder auf Griff. Das Befestigungsteil 13 verjüngt sich zum Ende 15 hin und erleichtert so das Einführen und die Demontage des Befestigungsteils 13 in die taschenförmige Aufnahme 18 des Rotors 7 und auch die Demontage. Die taschenförmige Aufnahme 18 besteht aus einem U-förmigen Teil 20, das im mittleren und unteren Bereich 22 Öffnungen 23 aufweist. Die Öffnungen 23 weisen parallele Seiten 24 für die Aufnahme eines Keils 35 auf. Im montierten Zustand der Zinken 12 greifen die Erhebungen 41 des Rotors 7 in die hier nicht dargestellten Ausnehmungen 40 der Zinken 12 ein. Der Keil 35 wird seitlich unterhalb der Befestigungsteile 13 der Zinken 12 geschoben und stützt sich gegen den Gegenhalter 26 ab. Der Keil 35 hält so die Zinken 12 mit ihrem Befestigungsteil 13 in einer formschlüssigen Verbindung mit dem Rotor 7. Der Keil 35 wird gegen Herausrutschen durch ein Sicherungsmittel 30 in Form einer Halteöse 31 gesichert, die im gesicherten Zustand um den Gegenhalter 26 greift und unmittelbar mit dem Keil 35 verbunden ist. Dies ist insbesondere der Figur 4 zu entnehmen.

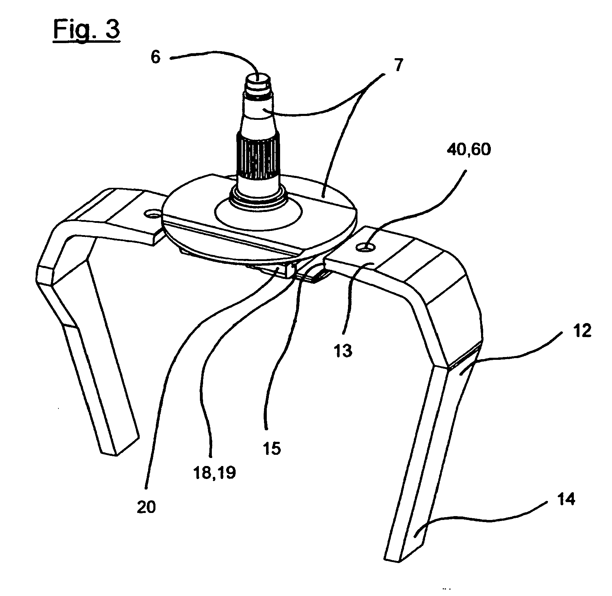

Die Figur 3 zeigt eine perspektivische Darstellung des Rotors 7' mit dem Zinken 12', wobei hier insbesondere die Ausnehmung 40 des Zinkens 12' sichtbar ist, die hier als Sackloch 60 ausgebildet ist. Die Ausnehmung 40 kann auch als Bohrung oder unrundes Loch ausgebildet sein.

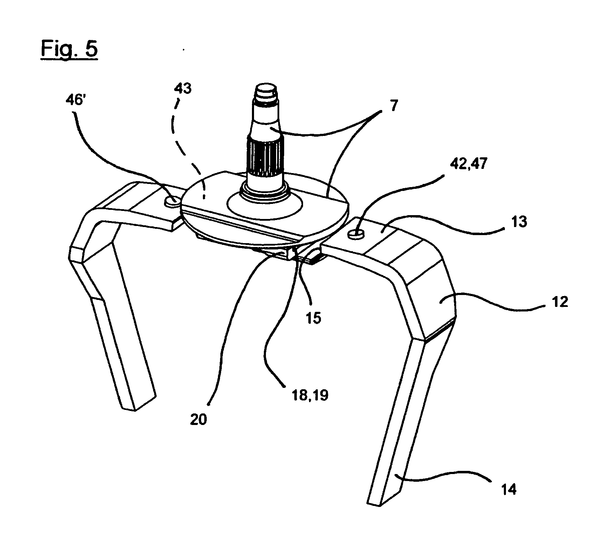

Die Figur 4 zeigt einen Schnitt durch einen Rotor 7 mit einem montierten Zinken 12. Der Rotor 7 weist die Achse 6 und eine Verzahnung 61 auf, die für eine drehfeste Verbindung mit einem nicht dargestellten Zahnrad gedacht ist. Der Zinken 12 ist hier mit seinem Befestigungsteil 13 in die taschenförmige Aufnahme 18 der Tasche 19 gesteckt und stützt sich einerseits gegen das U-förmige Teil 20 der Tasche 19 und andererseits gegen das Haltemittel 21, dem Keil 35 ab. Der Zinken 12 wird so einfach und effektiv in eine Formschlussstellung mit dem Rotor 7 gehalten. Der Keil 35 selbst wird durch das Sicherungsmittel 30 in Form der Halteöse 31) fixiert, die mit dem Keil 35 verbunden ist und fixierend um den Gegenhalter 26 greift. Die Erhebungen 41 auf dem Rotor 7 sind in Richtung Taschenmitte 45 geneigt bzw. weisen eine entsprechende Fläche 46 auf. Dadurch ist das Einschiebend es Zinkens 12 in die Tasche 19 gesichert und erleichtert, wobei im eingeschobenen Zustand gemäß Figur 4 der Zinken 12 im entsprechenden Bereich zwischen der Deckplattenunterseite 39 und der Einführungskante 44 eingespannt ist, sodass er sich nicht losrappeln kann, da er sowohl durch das Haltemittel 21 wie hier durch diesen Sitz gesichert ist und in seiner Formschlussposition verharren muss. Die Erhebungen 41 in Form von Nocken 59 korrespondieren genau mit den Ausnehmungen 40 in den Zinken 12, was auch umgekehrt für die Position nach Figur 5 gilt.

Figur 5 zeigt eine Ausführungsform des Zinkens 12 mit einer Erhebung 42 also einem Nocken 47 und einer korrespondierenden Ausnehmung 43 im Rotor 7. Auch bei dieser Ausführung, bei der die Flächen 46' geneigt sind, ist das Einführen des Zinken 12 in die taschenförmige Aufnahme 18 gesichert und erleichtert.

Alle genannten Merkmale, auch die den Zeichnungen allein zu entnehmen sind, werden allein und in Kombination als erfindungswesentlich angesehen.

## Patentansprüche

1. Bodenbearbeitungsgerät (1), insbesondere Kreiselegge (2) mit einem quer zur Arbeitsrichtung (4) angeordneten Getriebekasten (5) mit mehreren in einer Reihe nebeneinander angeordneten und um aufrechte Achsen (6) rotierend angetriebenen Rotoren (7) mit taschenförmigen Aufnahmen (18) für Zinken (12), die ein Befestigungsteil (13) und ein Arbeitsteil (14) aufweisen und mit ihrem Befestigungsteil (13) mit den Rotoren (7) lösbar verbunden sind, wobei die in die taschenförmigen Aufnahmen (18) einsteckbaren Zinken (12) unmittelbar formschlüssig mit den Rotoren (7) verbindbar ausgebildet und über Haltemittel (21) in der Formschlussverbindung arretierbar sind,
**dadurch gekennzeichnet,**
**dass** die Haltemittel (21) als radial zur Achse (6) der Rotoren (7) verschiebbare Keile (35) ausgeführt sind und über Sicherungsmittel (30) verfügen, die eine Fixierung in der Halteposition erbringend ausgebildet sind.

2. Bodenbearbeitungsgerät nach Anspruch 1,
**dass** die Sicherungsmittel (30) über Federkraft, Steckstifte, Halteösen (31) oder Reibkraft in ihrer Fixierstellung verbleibend ausgebildet sind.

3. Bodenbearbeitungsgerät nach Anspruch1,
**dadurch gekennzeichnet,**
**dass** das Befestigungsteil (13) der Zinken (12) mindestens eine Ausnehmung (40) und die Rotoren (7) auf ihrer Deckplattenunterseite (39) korrespondierende Erhebungen (41) aufweisen, die mit den Ausnehmungen (40) der Zinken (12) die Formschlussverbindung bildend ausgeführt sind.

4. Bodenbearbeitungsgerät nach Anspruch 1,
**dadurch gekennzeichnet,**
**dass** die Zinken (12) am Befestigungsteil (13) eine Erhebung (42) für die formschlüssige Verbindung mit einer korrespondierenden Ausnehmung (43) des Rotors (7) aufweisen.

5. Bodenbearbeitungsgerät nach Anspruch 3,
**dadurch gekennzeichnet,**
**dass** die Ausnehmung (40) im Befestigungsteil (13) als Sackloch (60) ausgebildet ist und die Erhebung (41) als korrespondierender Nocken (59).

6. Bodenbearbeitungsgerät nach Anspruch 3,
**dadurch gekennzeichnet,**
**dass** das Befestigungsteil (13) sich zum Ende (15) hin verjüngend, vorzugsweise keilförmig ausgebildet ist.

7. Bodenbearbeitungsgerät nach Anspruch 3,
**dadurch gekennzeichnet,**
**dass** das Befestigungsteil (13) Stufen bildend geformt ist und eine Dicke aufweist, die in der arretierten Position ein Anliegen an der Deckplattenunterseite (39) und Einführungskante (44) der Tasche (19) sichernd ausgeführt ist.

8. Bodenbearbeitungsgerät nach Anspruch 3,
**dadurch gekennzeichnet,**
**dass** die Erhebung (41) von der Einführungskante (44) in Richtung Taschenmitte (45) verdickt und eine ansteigende Fläche (46) bildend ausgeführt ist, während die Fläche der Erhebung (42) umgekehrt geneigt ist.

## Claims

1. A soil processing apparatus (1), in particular, a rotary harrow (2) having arranged transverse with respect to the working direction (4) a gearbox casing (5) with several driven rotors (7) arranged in a row side-by-side and rotating around a vertical axis (6), which driven rotors (7) are provided with pocket-shaped retainers (18) for tines (12), which tines (12) include a fastening part (13) and a working part (14) and which are detachably connected to the rotors (7) with their fastening part (13) wherein the tines (12) which are insertable into the pocket-shaped retainer (18) are formed such that they are positively connectable with the rotors (7) and are lockable by retaining means (21) in the positive connection
**characterized in that**
the holding means (21) are formed as wedges (35) which are slidable in a radial direction with respect to the axis (6) of the rotors (7) and which wedges (35) are provided with securing means (30), which securing means (30) are formed so as to provide a fixation in the holding position.

2. The soil processing apparatus according to claim 1
**characterized in that**
the securing means (30) are designed to remain in their fixation position by means of spring force, positioning pins, holding eyelets (31) or friction force.

3. The soil processing apparatus according to claim 1
**characterized in that**
the fastening part (13) of the tines (12) has at least one recess (40) and the rotors (7) on the underside of their cover plate (39) has corresponding elevations (41) which are designed to form the positive connection with the recesses (40) of the tines (12).

4. The soil processing apparatus according to claim 1
**characterized in that**
the tines (12) on the fastening part (13) have an elevation (42) for the positive connection with a corresponding recess (43) of the rotor (7).

5. The soil processing apparatus according to claim 3
**characterized in that**
the recess (40) in the fastening part (13) is formed as a blind hole (60) and the elevation (41) as corresponding cam (59).

6. The soil processing apparatus according to claim 3
**characterized in that**
the fastening part (13) is tapered towards the end (15) and is preferably wedge-shaped.

7. The soil processing apparatus according to claim 3
**characterized in that**
the fastening part (13) is designed with graduations and has a thickness which is designed to rest in a securing manner against the cover plate underside (39) and insertion edge (44) of the pocket (19) in the locked position.

8. The soil processing apparatus according to claim 3
**characterized in that**
the elevation (41) from the insertion edge (44) in the direction of the pocket centre (45) thickens and forms a rising surface (46) while the surface of the elevation (42) is contrarily inclined.

## Revendications

1. Appareil de traitement de sol (1), en particulier herse rotative (2) avec une boîte d'engrenages (5) disposée transversalement par rapport au sens de travail (4) avec plusieurs rotors (7) entraînés disposés l'un à côté de l'autre en une rangée et qui sont rotatifs autour d'axes (6) verticaux, rotors comportant des logements (18) en forme de poches pour des dents (12) qui présentent une pièce de fixation (13) et une pièce de travail (14) et qui sont reliées de manière détachable par leur pièce de fixation (13) avec les rotors (7), étant donné que les dents (12) emboîtables dans les logements (18) en forme de poches sont formées de manière à pouvoir être directement assemblées par forme avec les rotors (7) et peuvent être arrêtées par l'intermédiaire de moyens d'arrêt (21) dans l'assemblage par forme.
**caractérisé en ce que**
les moyens d'arrêt (21) sont réalisés comme cales (35) mobiles radialement par rapport à l'axe (6) des rotors (7) et disposent de moyens de fixation (30) qui sont formés de manière à fixer à la position d'arrêt.

2. Appareil de traitement de sol selon la revendication 1,
**caractérisé en ce que**
les moyens de fixation (30) sont formés de manière à rester par l'intermédiaire d'une force élastique, de goupilles d'arrêt, d'oeillets de retenue (31) ou d'une force de friction dans leur position de fixation.

3. Appareil de traitement de sol selon la revendication 1,
**caractérisé en ce que**
la pièce de fixation (13) des dents (12) présente au moins un évidement (40), et les rotors (7) des bosses (41) correspondantes à leur face inférieure de plaque de recouvrement (39), bosses qui sont formées de manière à réaliser avec les évidements (40) des dents (12) un assemblage par forme.

4. Appareil de traitement de sol selon la revendication 1,
**caractérisé en ce que**
les dents (12) de la pièce de fication (13) présentent une bosse (42) pour l'assemblage par forme avec un évidement (43) correspondant du rotor (7).

5. Appareil de traitement de sol selon la revendication 3,
**caractérisé en ce que**
l'évidement (40) est formé dans la pièce de fixation (13) comme trou borgne (60) et la bosse (41) comme came (59) correspondante.

6. Appareil de traitement de sol selon la revendication 3,
**caractérisé en ce que**
la pièce de fixation (13) est formée de manière à s'effiler vers l'extrémité (15), de préférence en forme de coin.

7. Appareil de traitement de sol selon la revendication 3,
**caractérisé en ce que**
la pièce de fixation (13) est formée de manière à former des échelons et a une épaisseur qui, à la position arrêtée, fixe le contact à la face inférieure de plaque de recouvrement (39) et l'arête d'introduction (44) de la poche (19).

8. Appareil de traitement de sol selon la revendication 3,
**caractérisé en ce que**
la bosse (41) est réalisée de manière à être de plus en plus épaisse de l'arête d'introduction (44) vers le centre de la poche (45) et à former une surface ascendante (46), tandis que la surface de la bosse (42) est inclinée dans le sens inverse.
